# FASCICULE DE BREVET EUROPEEN

(11) **EP 0 574 300 B1**
(45) Date de publication et mention de la délivrance du brevet: **09.04.1997**
(21) Numéro de dépôt: 93401455.6
(22) Date de dépôt: 08.06.1993
(51) Int. Cl.: H02H 7/22, H01H 33/59

(54) **Système de commande et d'autosurveillance, en particulier pour un appareil électrique multipolaire tel qu'un disjoncteur à haute tension**
Steuerungs- und Selbstüberwachungssystem, insbesondere für ein multipolares Gerät wie einen Hochspannungsschalter
Controlling and self-monitoring system, especially for a multipolar device such as a high-voltage circuit breaker

(30) Priorité: 09.06.1992 FR 9206920
(43) Date de publication de la demande: 15.12.1993
(73) Titulaire: GEC ALSTHOM T ET D SA, 75016 Paris (FR)
(72) Inventeur: Ebersohl, Gerard, F-69350 La Mulatiere (FR); Thuries, Edmond, F-69330 Meyzieu (FR)
(74) Mandataire: Fournier, Michel

(56) Documents cités:
- EP-A- 0 166 206
- EP-A- 0 338 185
- EP-A- 0 342 597
- WO-A-89/12345
- PATENT ABSTRACTS OF JAPAN vol. 13, no. 476 (E-837)(3824) 16 Octobre 1989
- PATENT ABSTRACTS OF JAPAN vol. 13, no. 342 (P-908)2 Août 1989
- PATENT ABSTRACTS OF JAPAN vol. 15, no. 405 (E-1122)16 Octobre 1991

## Description

La présente invention concerne un système de commande et d'autosurveillance pour un appareil électrique multipolaire. Dans la suite, on décrira le système appliqué à un disjoncteur triphasé à haute tension, mais on doit comprendre que le même système peut s'appliquer, mutatis mutandis, à tout appareil électrique multipolaire, par exemple à un sectionneur triphasé.

Un disjoncteur triphasé à haute tension comporte trois pôles (désignés dans la suite "pôle 1", "pôle 2", "pôle 3") pouvant être commandées séparément ou simultanément. L'isolement des disjoncteurs à haute tension modernes est assuré par un gaz à haut pouvoir diélectrique; on choisit de préférence l'hexafluorure de soufre (SF6) sous une pression de quelques hectopascals, pur ou mélangé d'azote. La pression de gaz isolant dans les enceintes des pôles est un facteur important qu'il convient de prendre en considération lorsqu'on veut manoeuvrer un disjoncteur, car il serait dangereux d'ouvrir un pôle si, par suite d'un manque de pression, l'isolement ultérieur entre contacts ne pouvait être assuré. Par commodité, on désignera dans la suite cette donnée par "pression SF6", et on pourra préciser "pression SF6 pôle 1", "pression SF6 pôle 2", "pression SF6 pôle 3" si nécessaire.

Chacun des pôles des disjoncteurs est commandé par l'intermédiaire d'une bobine de fermeture et d'une bobine d'ouverture. La bobine d'ouverture est mise sous tension par l'intermédiaire du contact d'un relais de protection; la bobine de fermeture est mise sous tension par l'intermédiaire du contact d'un réenclencheur. En variante, les bobines d'ouverture et de fermeture pourraient être sollicitées par des ordres manuels locaux ou distants.

Chaque pôle du disjoncteur est doté d'un dispositif de détection de la position de l'équipage mobile:
- un premier dispositif, dit contact auxiliaire ouverture (dans la suite en abrégé CAO), fournit un signal électrique indiquant que l'équipage mobile a effectué un déplacement d'une position fermée du pôle à une position ouverte,
- un second dispositif, dit contact auxiliaire de fermeture (dans la suite en abrégé CAF), fournit un signal indiquant que l'équipage mobile a effectué un déplacement entre une position ouverte du pôle et une position fermée.

Ces contacts auxiliaires sont de préférence du type décrit dans la demande de brevet français n° 91 04 631 du 16 avril 1991.

Ces rappels de l'équipement d'un disjoncteur tripolaire étant faits, le but de la présente invention est de déterminer un système de commande et d'autosurveillance du disjoncteur, constituant le niveau fonctionnel de base d'un poste électrique, appelé aussi niveau zéro"0".

Un but de l'invention est de réaliser un système fiable, donc à l'abri des perturbations existant dans un poste, ces perturbations étant d'ordre climatique (froid, intempéries) ou d'ordre électro-magnétique (perturbations induites par la présence et la manoeuvre de l'appareillage environnant).

Un autre but de l'invention est de réaliser un système économique, dans lequel le câblage est réduit au minimum.

Un autre but de l'invention est de réaliser un système permettant de tester en usine la configuration de l'appareil électrique et de son système de contrôle et de commande.

L'invention a pour objet un système de commande et d'autosurveillance pour un disjoncteur triphasé faisant partie d'un poste de transport, ou d'interconnexion, ou de distribution électrique sous la direction d'un exploitant, comprenant trois pôles comportant chacun une bobine de fermeture et une bobine d'ouverture reliées à une source de tension, chaque pôle comprenant un contact auxiliaire d'ouverture et un contact auxiliaire de fermeture, le disjoncteur étant commandé par des dispositifs de protection, caractérisé en ce que chacun des pôles est doté d'un microprocesseur recevant les informations des contacts auxiliaires d'ouverture et de fermeture ainsi qu'un signal d'auto-surveillance de ses bobines, le microprocesseur commandant deux interrupteurs statiques en série respectivement dans le circuit de la bobine d'ouverture et dans le circuit de la bobine de fermeture, les microprocesseurs des trois pôles étant les abonnés d'un réseau local comprenant un bus série piloté par un organe gestionnaire, le bus étant relié à un organe de traitement recevant les signaux collectés par les microprocesseurs et les signaux émis par les dispositifs de protection ou par l'exploitant, lesdits signaux étant périodiquement remis à jour selon un programme fourni audit organe gestionnaire, ledit organe de traitement recueillant par ledit bus les données fournies par lesdits microprocesseurs et élaborant des ordres d'autorisation ou d'interdiction d'ouverture transmis par ledit bus auxdits microprocesseurs, lesdits microprocesseurs commandant le changement d'état desdits interrupteurs statiques pour exécuter les ordres d'ouverture ou de fermeture du disjoncteur.

Dans un premier mode de réalisation de l'invention, les bobines d'ouverture et de fermeture sont respectivement en série avec les contacts d'un organe de protection et les contacts d'un réenclencheur, les interrupteurs statiques étant normalement fermés et n'étant ouverts que sur ordre des microprocesseur, en fin d'exécution de l'ordre d'ouverture ou de fermeture correspondant.

Dans un second mode de réalisation, les ordres d'ouverture ou de fermeture sont transmis à l'organe de traitement qui les adresse aux microprocesseurs, lesdits interrupteurs statiques étant normalement ouverts et n'étant fermés que sur ordre des microprocesseurs, pendant le temps nécessaire à l'exécution d'un ordre d'ouverture ou de fermeture.

Avantageusement, le bus possède plusieurs abonnés constitués par des organes de contrôle tels que le contrôle de la pression de gaz d'isolement, le contrôle de l'usure électrique par la sommation Σi²t, ou d'autres contrôles ou mesures relatives à l'environnement du disjoncteur tel que la mesure de la pression d'huile des commandes hydrauliques du disjoncteur par exemple.

De préférence, chaque bobine est parcourue en permanence par un courant de faible intensité élaboré par un circuit constitué de la bobine elle-même, d'une résistance et de l'interrupteur statique associé à la bobine, ce circuit étant alimenté par une source de tension, l'image de ce courant étant transmis au microprocesseur pour fournir un signal d'auto-diagnostic de la bobine et de sa commande.

Avantageusement, les interrupteurs statiques sont reliés aux microprocesseurs par des liaisons à fibre optique.

L'invention est maintenant expliquée en détail, avec référence au dessin dans lequel:
- la figure 1 est une vue schématique illustrant l'organisation fonctionnelle de type classique pour la conduite d'un poste électrique comprenant plusieurs disjoncteurs triphasés,
- la figure 2 est une vue schématique du système de commande et d'autosurveillance d'un disjoncteur selon un premier mode de réalisation de l'invention,
- la figure 3 est un schéma expliquant l'alimentation et l'auto-surveillance d'une bobine d'ouverture et de sa commande,
- la figure 4 est une vue schématique du systême selon un autre mode de réalisation de l'invention.

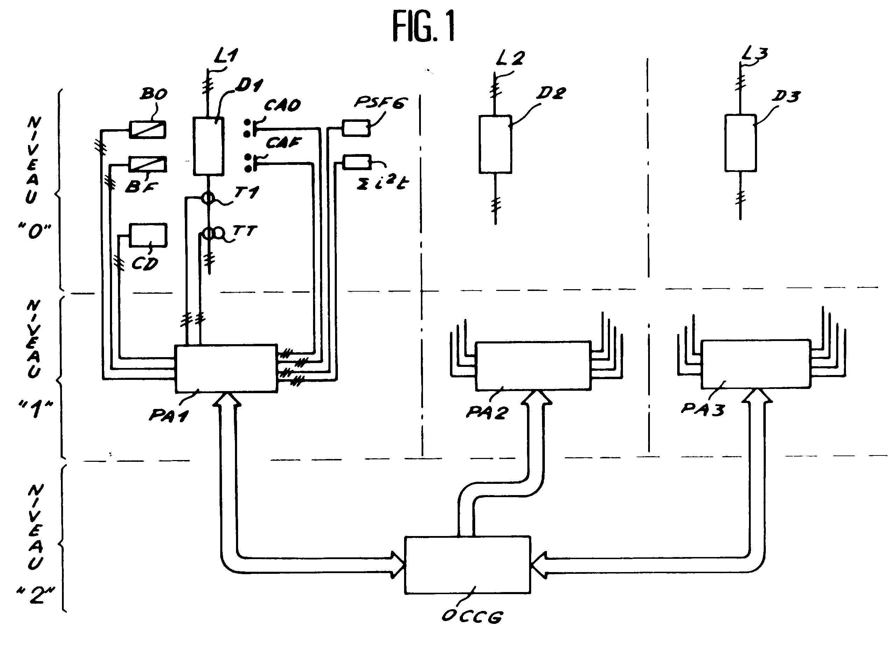

La figure 1, qui illustre l'art connu, est un schéma unifilaire partiel illustrant de l'organisation fonctionnelle d'un poste électrique comprenant 3 départs référencés L1, L2 et L3, et protégés respectivement par des disjoncteurs triphasés D1, D2 et D3. Bien entendu, ce nombre 3 est donné à titre d'exemple, le poste pouvant comporter davantage de départs.

Dans la hiérarchie des organes de contrôle, de surveillance et de commande du disjoncteur, on distingue trois niveaux fonctionnels:
- le niveau "0" comprend les organes de mesure, de contrôle et de commande propres aux disjoncteurs, qui seront détaillés plus loin.
- le niveau "1" comprend, pour chaque disjoncteur triphasé, un organe d'élaboration des signaux de manoeuvre du disjoncteur, à partir des données fournies au niveau zéro et sous le contrôle et selon les instructions du niveau 2; cet organe est référencé PA1 pour le disjoncteur D1, PA2 pour le disjoncteur D2 et PA3 pour le disjoncteur D3.
- le niveau "2", qui est le niveau de l'exploitant du poste électrique, qui choisit les départs utilisés en fonction des contraintes d'exploitation et des disponibilités, comprend un organe central de commande et de gestion OCCG.

Dans ce qui suit, seuls les éléments équipant le disjoncteur D1 seront décrits, étant entendu que les disjoncteurs D2 et D3 sont équipés de la même manière.

Le disjoncteur triphasé comporte des organes communs aux trois pôles, par exemple un organe CD de contrôle de la commande fournissant des signaux sur l'aptitude de la commande à exécuter un ordre.

Chaque pôle du disjoncteur triphasé comprend notamment une bobine de commande d'ouverture BO, une bobine de commande de fermeture BF, un contact auxiliaire d'ouverture CAO fournissant un signal indiquant que le pôle a effectué une transition de l'état fermé à l'état ouvert, un contact auxiliaire de fermeture CAF fournissant un signal indiquant que le pôle a effectué une transition de l'état ouvert à l'état fermé, un organe PSF6 indiquant la pression du gaz à l'intérieur du pôle, un organe de mesure de l'usure électrique fondé sur le comptage Σi²t, désigné Σi²t.

Tous les organes précités sont reliés par des liaisons câblées à l'organe PA1.

Le nombre de câbles à installer est très important et il en résulte:
- un prix de revient élevé en raison de l'important temps de main d'oeuvre,
- des risques d'erreurs de câblage, onéreux à détecter et à réparer sur le site,
- des risques de pannes (câbles cassés, cosses dessoudées, vis desserrées, etc...),
- des risques de mauvais fonctionnement dus à des perturbations électromagnétiques induites dans les câbles par la présence des lignes à haute tension et des autres appareils manoeuvrant dans le voisinage.

Grâce à l'invention, comme on le verra plus loin, tous ces inconvénients sont évités.

L'invention concerne le niveau "0" de l'organisation fonctionnelle du poste.

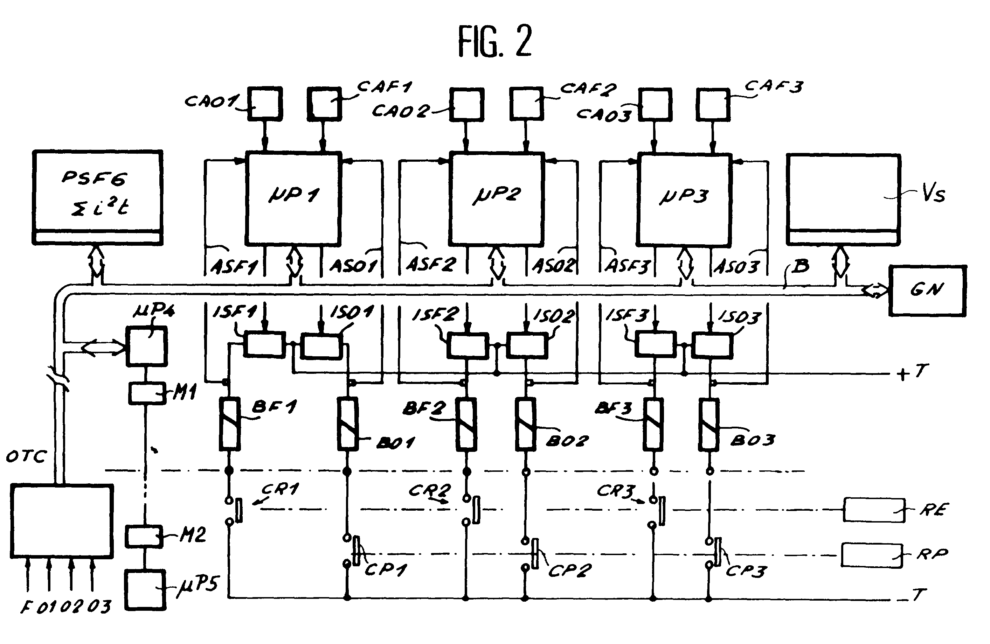

Dans le premier mode d'exécution de l'invention, illustré dans la figure 2, on voit que selon une caractéristique fondamentale de l'invention, chaque pôle d'un disjoncteur est équipé d'un microprocesseur; les microprocesseurs relatifs aux trois pôles du disjoncteur sont référencés µP1, µP2 et µP3 respectivement.

Selon une autre caractéristique de l'invention, les microprocesseurs sont les abonnés d'un bus série B piloté par un organe GN appelé gestionnaire des nomenclatures ou gestionnaire des requêtes.

Selon une autre caractéristique de l'invention, des organes de mesure PSF6 de la pression des pôles et de mesure Σi²t de l'usure électrique des pôles sont également des abonnés du bus B. Ces organes sont représentés dans la figure 2 par l'unique rectangle marqué PSF6, Σi²t.

Dans la figure 2, les rectangles BO1, BO2 et BO3 représentent les bobines d'ouvertures respectives des pôles 1, 2 et 3 du disjoncteur triphasé. Ces bobines sont alimentées par une tension -T +T, notamment par l'intermédiaire des contacts CP1, CP2 et CP3 d'un relais de protection RP.

Les rectangles BF1, BF2 et BF3 sont les bobines de fermeture respectives des trois pôles du disjoncteur; elles sont alimentées par la même source de tension -T +T par l'intermédiaire notamment des contacts CR1, CR2 et CR3 d'un réenclencheur RE.

Le relais et le réenclencheur appartiennent au niveau 1 de fonctionnalité, qui est délimité symboliquement dans la figure 2 par une ligne en traits mixtes.

Selon une caractéristique fondamentale de l'invention, des interrupteurs statiques sont placés en série dans les circuits des bobines et leur état ouvert ou fermé est commandé par les microprocesseurs; pour le pôle 1, la bobine BF1 est en série avec l'interrupteur statique ISF1 commandé par le microprocesseur µP1 et la bobine BO1 est en série avec l'interrupteur statique ISO1 également commandé par le microprocesseur µP1. Pour les autres pôles, les interrupteurs statiques sont désignés par des notations analogues avec les finales 2 et 3 pour les pôles 2 et 3 respectivement.

Selon l'invention, les microprocesseurs recoivent les signaux fournis par les contacts auxiliaires; ainsi, le microprocesseur µP1 reçoit les signaux du contact auxiliaire ouverture CAO1 et le signal du contact auxiliaire fermeture CAF1; les autres microprocesseurs reçoivent les signaux des contacts auxiliaires qui leur sont affectés.

Les bobines peuvent être munies d'un organe d'auto-surveillance dont le signal est transmis au microprocesseur correspondant; ainsi le microprocesseur µP1 reçoit par les liaisons ASF1 et ASO1 les signaux d'auto-surveillance des bobines BF1 et BO1 respectivement. Les autres microprocesseurs reçoivent des signaux analogues en provenance des bobines du pôle auxquels ils sont affectés.

Tous les signaux collectés par les microprocesseurs constituent une base de données qui est rafraîchie périodiquement, sous l'autorité du gestionnaire de nomenclatures GN, et adressée à un organe de traitement central OTC préférentiellement placé physiquement au niveau 1 de fonctionnalité avec laquel il assure en outre l'interface. Ceci est possible par l'emploi d'un bus optique qui pourra avoir une longueur de plusieurs centaines de mètres et qui est est par nature à l'abri de toutes perturbations climatiques ou électromagnétiques.

Le circuit OTC reçoit, en même temps que les relais CP1 et CR1 liés aux protection et au réenclencheur, les ordres respectifs d'ouverture et de fermeture issus de ces derniers, et symbolisés dans la figure par les références O1, O2, O3 pour l'ouverture et F pour la fermeture. On note qu'il y a trois ordres d'ouverture car un pôle seul peut recevoir un ordre d'ouverture sur défaut phase-terre, alors qu'il n'y a qu'un ordre de refermeture, cet ordre pouvant sans inconvénient être adressé sans nécessité aux pôles déjà fermés.

Avant de décrire le fonctionnement du système, on doit noter que l'organe de traitement central OTC mémorise les discordances qui peuvent survenir dans le fonctionnement du disjoncteur. Pour comprendre la notion de discordance, on peut prendre l'exemple suivant: supposons que le disjoncteur soit ouvert et qu'un ordre de fermeture soit lancé. En même temps que l'ordre est reçu par l'OTC, celui-ci ouvre une fenêtre temporelle to, par exemple de 200 millisecondes; l'OTC observe l'état des pôles à l'expiration de cette temporisation; si l'un des pôles ne s'est pas fermé, l'OTC mémorise une discordance et lance un ordre d'ouverture en fermant un contact en parallèle avec CR2 (non représenté) et après avoir préalablement supprimé l'ordre de fermeture dans la base de données.

Une autre procédure existe lorsque le disjoncteur est fermé et qu'on lance un ordre d'ouverture. Dans ce cas, on se contente d'une simple signalisation de l'anomalie.

Le fonctionnement du système est décrit maintenant. Le circuit OTC reçoit en permanence les données recueillies par les microprocesseurs et le circuit PSF6 Σi²t; ces données sont rafraîchies par exemple toutes les 2,5 millisecondes pour les données prioritaires (CAO,CAF), toutes les 20 millisecondes pour les données non prioritaires (PSF6 par exemple). L'OTC analyse en permanence ces données.

### Ouverture du disjoncteur

Supposons que le disjoncteur soit fermé. L'OTC, n'a pas détecté d'anomalie: les microprocesseurs maintiennent fermés les interrupteurs statiques d'ouverture ISO. Si un ordre d'ouverture survient, par fermeture des contacts CP, l'ouverture du disjoncteur a lieu immédiatement, par l'alimentation des bobines BO. Les microprocesseurs coupent l'alimentation des bobines BO, par ouverture des relais IS, dès que les contacts auxiliaires CAO ont indiqué que l'ouverture s'est bien effectuée.

### Fermeture du disjoncteur

Le fonctionnement est analogue. Les microprocesseurs maintiennent les relais statiques ISF fermés si l'OTC ne détecte aucune anomalie qui résulterait soit de la position des pôles (connue par les signaux des contacts auxiliaires transmis par les microprocesseurs), soit de la configuration du poste (indiquée par le niveau 2).

Lorsqu'un ordre de fermeture du disjoncteur est donné, manifesté par la fermeture des contacts CR du réenclencheur, les bobines BF sont alimentées, provoquant le fermeture des pôles. Les microprocesseurs coupent l'alimentation des bobines par ouverture des contacts statiques ISF dès que les contacts auxiliaires CAF ont indiqué que l'opération de fermeture était bien exécutée.

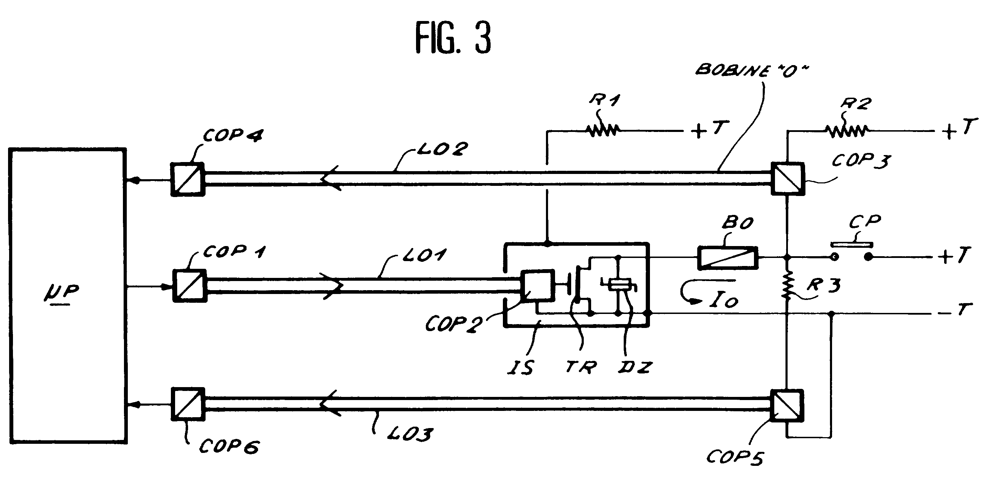

La figure 3 montre un mode de réalisation de l'alimentation d'une bobine d'ouverture BO. On va admettre que le disjoncteur est fermé. Dans ces conditions, l'interrupteur statique associé à la bobine BO est normalement fermé, le contact CP est normalement ouvert.

Dans la figure, la référence BO désigne une bobine d'ouverture alimentée par une tension -T +T ; la bobine est en série avec un contact CP d'un relais de protection et avec un relais statique IS. Le relais statique est commandé par le microprocesseur µP, au moyen d'une liaison à fibre optique LO1 munie à chacune de ses extrémités de convertisseurs opto-électroniques COP1 et COP2. L'interrupteur statique est polarisé par la même source de tension -T +T à travers une résistance R1. On n'a représenté du relais statique qu'un transistor TR piloté par le signal émis par le microprocesseur à travers la ligne LO1 et qu'une diode Zener DZ. Le bobine BO est traversée en permanence par un courant Io de 30mA par exemple, car elle est reliée en permanence à la borne +T de la source de tension à travers une résistance R2; ce courant traverse la résistance R2, la bobine BO et l'interrupteur statique IS, quand il est fermé. Ce courant sert à fournir au microprocesseur un signal montrant que la bobine est saine, ainsi que l'interrupteur statique associé: le microprocesseur sait donc que la prochaine commande d'ouverture pourra être exécutée à coup sûr dès la fermeture du contact protection CP; ceci est obtenu au moyen d'un convertisseur opto-électronique COP3, inséré dans le circuit de la bobine, et qui transmet son information par une fibre optique LO2 dont l'extrémité voisine du microprocesseur est munie d'un convertisseur opto-électronique COP4.

L'ordre d'ouverture du pôle, qui se manifeste par la fermeture du contact CP du relais de protection, est transmis au microprocessuer µP grâce à un circuit comprenant une résistance R3 connectée en aval de la borne +T et en série avec un convertisseur opto-électronique COP5 relié à la borne -T. L'information recueillie par le convertisseur COP5 est transmise au microprocesseur par une liaison à fibre optique LO3 dont l'extrémité proche du microprocesseur est munie d'un convertisseur opto-électronique COP6.

Outre l'exécution des ordres d'ouverture et de fermeture, les microprocesseurs recueillent, et transmettent à l'OTC, des renseignements relatifs aux durées d'ouverture ou de fermeture des pôles. Ces données, transmises par l'OTC au niveau 2 de fonctionnalité, peuvent permettre d'élaborer la maintenance prédictive des appareils.

Les avantages du système qui vient d'être décrit sur un premier mode de réalisation sont importants:
- suppression d'une quantité importante de câblage, grèvant le prix de l'installation, et donc importante réduction du coût de main d'oeuvre; cette suppression du câblage existe en particulier entre les microprocesseurs du niveau "0" et d'une manière encore plus appréciable entre niveau "0" et niveau "1" grâce au bus série permettant de déporter également le microprocesseur OTC.
- possibilité de tester l'installation en usine, à l'aide de simulateurs, éventuellement, et montage très rapide sur le site puisqu'il ne reste que quelques connecteurs à raccorder (liaison entre niveau "0" et niveau "1"), d'où une économie supplémentaire,
- coût de maintenance réduit, car les probabilités de pannes sont beaucoup moins importantes grâce à la disparition des câblages et à l'autosurveillance permanente du bus de communication série qui les remplace,
- fonctionnement plus sûr grâce à l'insensibilité du système aux perturbations d'ordre électromagnétiques, fréquentes dans un poste à haute tension; les transmissions se font en effet par bus optique, les quelques parties métalliques étant courtes et pouvant être blindés efficacement à peu de frais,
- ouverture du système au niveau "0" grâce au bus qui permet de gérer une base de données répartie: on peut rajouter sans câblage supplémentaire un microprocesseur pouvant surveiller tel ou tel paramètre significatif du bon fonctionnement du disjoncteur (par exemple analyse de signature des vibrations mécaniques, etc..) grâce au bus série,
- possibilité de rapatrier vers le niveau "2" (opérateur) tout ou partie des informations d'auto-diagnostic de la base de données du niveau "0", sans câblage additionnel, particulièrement si les éléments du niveau 1 sont eux-mêmes en communication par un réseau de terrain.

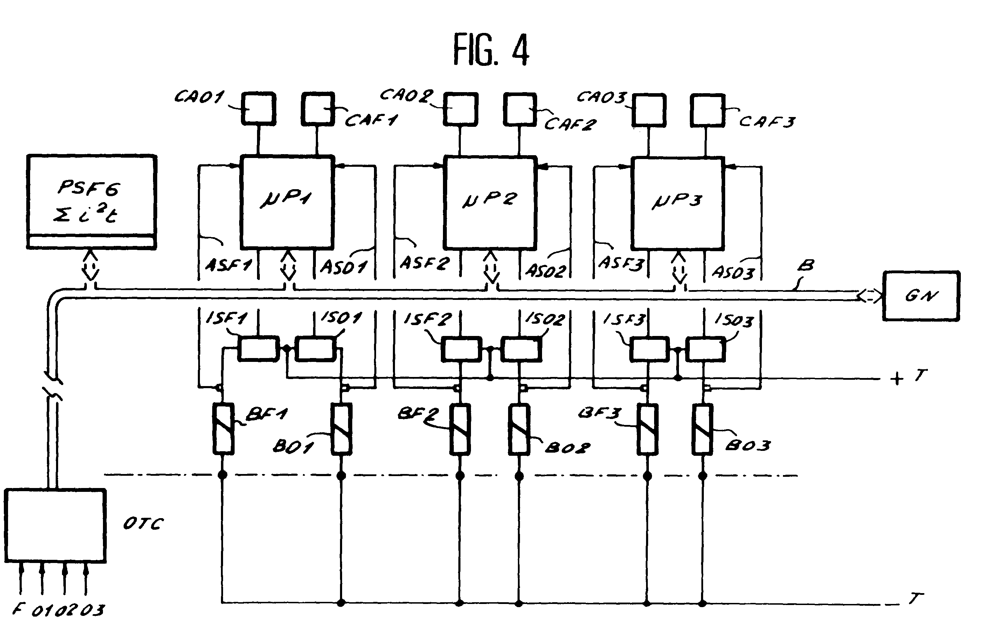

La figure 4 illustre un mode de réalisation encore plus élaboré de l'invention.

Les éléments communs aux figures 2 et 3 ont reçu les mêmes numéros de référence.

Dans la figure 4, les relais et réenclencheurs sont supprimés. Les ordres d'ouverture et de fermeture (O1, O2, O3, F) élaborés au niveau 1 de fonctionnalité sont transmis par l'OTC aux microprocesseurs qui commandent directement les interrupteurs statiques. Ces derniers sont, en l'attente d'ordre d'ouverture ou de fermeture, normalements ouverts.

Le système de l'invention est un système ouvert en ce sens que le bus B peut recevoir d'autres abonnés que les microprocesseurs. Outre les organes de contrôle de pression (PSF6) et d'usure électrique (Σi²t) déjà mentionnés, le bus peut recevoir d'autres données telles que des données relatives aux pressions d'huile des commandes hydrauliques ou à l'analyse de signature vibratoire.

En particulier, le bus peut comporter une station dite usure, représentée avec la référence Vs dans la figure 2; cette station reçoit des autres stations par exemple les informations relatives aux instants de commande d'ouverture et de fermeture de chaque pôle et aux instants de fonctionnement des contacts auxiliaires d'ouverture et de fermeture de chaque pôle. Le programme de cette station calcule les vitesses de fonctionnement de chaque pôle, les compare à des références et donne des alarmes le cas échéant.

Le bus peut également comporter une station référencée µP4 dans la figure 2, qui est puits pour toutes les données et qui peut être elle-même source de données; c'est par exemple un microordinateur qui est reliée par un modem M1 à une ligne téléphonique dont l'extrémité est reliée par un modem M2 à un microordinateur µP5. On peut ainsi, à distance, commander le disjoncteur.

## Revendications

1. Système de commande et d'autosurveillance pour un disjoncteur triphasé faisant partie d'un poste de transport, ou d'interconnexion, ou de distribution électrique sous la direction d'un exploitant, comprenant trois pôles comportant chacun une bobine de fermeture (BF1, BF2, BF3) et une bobine d'ouverture (BO1, BO2, BO3) reliées à une source de tension (-T +T), chaque pôle comprenant un contact auxiliaire d'ouverture (CAO1, CAO2, CAO3) et un contact auxiliaire de fermeture (CAF1, CAF2, CAF3), le disjoncteur étant commandé par des dispositifs de protection, caractérisé en ce que chacun des pôles est doté d'un microprocesseur (µP1, µP2, µP3) recevant les informations des contacts auxiliaires d'ouverture et de fermeture (CAO1, CAO2, CAO3, CAF1, CAF2, CAF3) ainsi qu'un signal d'autosurveillance de ses bobines, le microprocesseur commandant deux interrupteurs statiques (ISO1, ISO2, ISO3, ISF1, ISF2, ISF3) en série respectivement dans le circuit de la bobine d'ouverture et dans le circuit de la bobine de fermeture, les microprocesseurs des trois pôles étant les abonnés d'un réseau local comprenant un bus série (B) piloté par un organe gestionnaire (GN), le bus étant relié à un organe de traitement (OTC) recevant les signaux collectés par les microprocesseurs et les signaux (O1, O2, O3, F) émis par les dispositifs de protection ou par l'exploitant, lesdits signaux étant périodiquement remis à jour selon un programme fourni audit organe gestionnaire (GN), ledit organe de traitement (OTC) recueillant par ledit bus les données fournies par lesdits microprocesseurs et élaborant des ordres d'autorisation ou d'interdiction d'ouverture transmis par ledit bus auxdits microprocesseurs, lesdits microprocesseurs commandant le changement d'état desdits interrupteurs statiques pour exécuter les ordres d'ouverture ou de fermeture du disjoncteur.

2. Système selon la revendication 1, caractérisé en ce que les bobines d'ouverture (BO1, BO2, BO3) et de fermeture (BF1, BF2, BF3) sont respectivement en série avec les contacts (CP1, CP2, CP3) d'un organe de protection (RP) et les contacts (CR1, CR2, CR3) d'un réenclencheur (RE), les interrupteurs statiques (ISO1, ISO2, ISO3, ISF1, ISF2, ISF3) étant normalement fermés et n'étant ouverts que sur ordre des microprocesseurs (µP1, µP2, µP3), en fin d'exécution de l'ordre d'ouverture ou de fermeture correspondant.

3. Système selon la revendication 1, caractérisé en ce que les ordres d'ouverture ou de fermeture sont transmis à l'organe de traitement (OTC) qui les adresse aux microprocesseurs (µP1, µP2, µP3), lesdits interrupteurs statiques (ISO1, ISO2, ISO3, ISF1, ISF2, ISF3) étant normalement ouverts et n'étant fermés que sur ordre des microprocesseurs, pendant le temps nécessaire à l'exécution d'un ordre d'ouverture ou de fermeture.

4. Système selon l'une des revendications 1 à 3, caractérisé en ce que le bus (B) possède plusieurs abonnés constitués par des organes de contrôle tels que le contrôle de la pression de gaz d'isolement (PSF6), le contrôle de l'usure électrique par la sommation Σi²t, ou d'autres contrôles ou mesures relatives à l'environnement du disjoncteur tel que par exemple la mesure de la pression d'huile des commandes hydrauliques du disjoncteur ou l'analyse de signatures vibratoires.

5. Système selon l'une des revendications 1 à 4, caractérisé en ce que chaque bobine est parcourue en permanence par un courant (Io) de faible intensité élaboré par un circuit constitué de la bobine elle-même, d'une résistance (R2) et de l'interrupteur statique (IS) associé à la bobine, ce circuit étant alimenté par une source de tension (-T +T), l'image de ce courant étant transmis au microprocesseur pour fournir un signal d'auto-diagnostic de la bobine et de sa commande.

6. Systéme selon l'une des revendications 1 à 5, caractérisé en ce que les interrupteurs statiques (ISO1, ISO2, ISO3, ISF1, ISF2, ISF3) sont reliés aux microprocesseurs par des liaisons à fibre optique.

7. Système selon l'une des revendications 1 à 6, caractérisé en ce que ledit bus (B) comprend un abonné Vs recevant notamment les données relatives aux instants où sont donnés les ordres d'ouverture et de fermeture, et aux instants où basculent les contacts auxiliaires, calculant les temps d'exécution des ordres, les comparant à des données enregistrées et donnant des informations sur l'état d'usure des pôles.

8. Système selon l'une des revendications 1 à 7, caractérisé en ce que le bus comporte une station (µP4) recevant toutes les données et pouvant en émettre, reliée par modem à une ligne téléphonique elle-même relié par modem à un microordinateur, de manière à commander l'appareil à distance.

## Patentansprüche

1. System zur Steuerung und Selbstüberwachung eines dreiphasigen Leistungsschalters, der zu einer Schaltstation zum Transport, zur Verbindung oder zur Verteilung elektrischer Energie unter Kontrolle durch einen Betreiber gehört und drei Pole besitzt, die je eine an eine Spannungsquelle (-T+T) angeschlossene Schließspule (BF1, BF2, BF3) und eine Öffnungsspule (BO1, BO2, BO3) enthalten und einen Öffnungshilfskontakt (CAO1, CAO2, CAO3) sowie einen Schließhilfskontakt (CAF1, CAF2, CAF3) aufweisen, wobei der Leistungsschalter von Schutzvorrichtungen gesteuert wird, dadurch gekennzeichnet, daß jeder der Pole mit einem Mikroprozessor (µP1, µP2, µP3) versehen ist, der die Informationen von den Öffnungs- und Schließhilfskontakten (CAO, CAO2, CAO3, CAF1, CAF2, CAF3) sowie ein Selbstüberwachungssignal seiner Spulen empfängt und zwei statische Unterbrecher (ISO1, ISO2, ISO3, ISF1, ISF2, ISF3) jeweils in Reihe in der Schaltung der Öffnungsspule bzw. der Schließspule steuert, daß die Mikroprozessoren der drei Pole Zugang zu einem örtlichen Netz mit einem Serienbus (B) haben, der von einem Verwaltungsorgan (GN) gesteuert wird, daß der Bus an ein Verarbeitungsorgan (OTC) angeschlossen ist, das die von den Mikroprozessoren gesammelten Signale und die von den Schutzvorrichtungen oder dem Betreiber ausgesendeten Signale (O1, O2, O3, F) empfängt, die periodisch gemäß einem an das Verwaltungsorgan (GN) gelieferten Programm aktualisiert werden, daß das Verarbeitungsorgan (OTC) über den Bus die von den Mikroprozessoren gelieferten Daten sammelt und Befehle zur Freigabe oder Nichtfreigabe der Öffnung erarbeitet, die über den Bus an die Mikroprozessoren übertragen werden, und daß die Mikroprozessoren den Zustandswechsel der statischen Unterbrecher steuern, um die Öffnungs- und Schließbefehle des Leistungsschalters auszuführen.

2. System nach Anspruch 1, dadurch gekennzeichnet, daß die Öffnungs- bzw. Schließspulen (BO1, BO2, BO3; BF1, BF2, BF3) mit den Kontakten (CP1, CP2, CP3) eines Schutzorgans (RP) bzw. den Kontakten (CR1, CR2, CR3) eines Wiedereinschaltorgans (RE) in Reihe liegen, wobei die statischen Unterbrecher (ISO1, ISO2, ISO3, ISF1, ISF2, ISF3) normalerweise geschlossen sind und nur auf Befehl durch die Mikroprozessoren (µP1, µP2, µP3) am Ende der Ausführung des entsprechenden Öffnungs- oder Schließbefehls geöffnet werden.

3. System nach Anspruch 1, dadurch gekennzeichnet, daß die Öffnungs- und Schließbefehle an das Verarbeitungsorgan (OTC) übermittelt werden, das sie an die Mikroprozessoren (µP1, µP2, µP3) richtet, wobei die statischen Unterbrecher (ISO1, ISO2, ISO3, ISF1, ISF2, ISF3) normalerweise offen sind und erst auf Befehl durch die Mikroprozessoren während der für die Ausführung eines Öffnungs- oder Schließbefehls notwendigen Zeit geschlossen werden.

4. System nach einem der Ansprüche 1 bis 3, dadurch gekennzeichnet, daß zum Bus (B) weitere Datenquellen und Senken Zugang haben, die von Kontrollorganen gebildet werden, wie z.B. dem Kontrollorgan für den Druck des Isolationsgases (PSF6), dem Kontrollorgan für die elektrische Abnutzung durch Summierung Σi²t oder anderen Kontroll- oder Meßorganen bezüglich des Umfelds des Leistungsschalters, wie z.B. der Messung des Öldrucks für die Hydrauliksteuerungen des Leistungsschalters oder der Analyse der mechanischen Schwingungen.

5. System nach einem der Ansprüche 1 bis 4, dadurch gekennzeichnet, daß jede Spule permanent von einem schwachen Strom (Io) durchflossen wird, der von einer aus der Spule selbst, einem Widerstand (R2) und dem der Spule zugeordneten statischen Unterbrecher (IS) gebildeten Schaltung erarbeitet wird, die von einer Spannungsquelle (-T+T) gespeist wird, wobei das Bild dieses Stroms an den Mikroprozessor übermittelt wird, um ein Selbstdiagnosesignal der Spule und ihrer Steuerung zu liefern.

6. System nach einem der Ansprüche 1 bis 5, dadurch gekennzeichnet, daß die statischen Unterbrecher (ISO1, ISO2, ISO3, ISF1, ISF2, ISF3) an die Mikroprozessoren über Lichtleitfaserverbindungen angeschlossen sind.

7. System nach einem der Ansprüche 1 bis 6, dadurch gekennzeichnet, daß der Bus (B) mit einem Organ (Vs) verbunden ist, das insbesondere die Daten bezüglich der Zeitpunkte, an denen die Öffnungs- und Schließbefehle gegeben werden, und bezüglich der Zeitpunkte empfängt, an denen die Hilfskontakte kippen, und das die Ausführungsdauer der Befehle berechnet, sie mit gespeicherten Daten vergleicht und Informationen über den Abnutzungszustand der Pole liefert.

8. System nach einem der Ansprüche 1 bis 7, dadurch gekennzeichnet, daß der Bus mit einer Station (µP4) verkehrt, die alle Daten empfängt und Daten aussenden kann und über ein Modem an eine Telefonleitung angeschlossen ist, die ihrerseits über ein Modem mit einem Kleinrechner verbunden ist, so daß die Anlage ferngesteuert werden kann.

## Claims

1. A control and self-monitoring system for a three-phase circuit breaker forming a portion of a station for transporting, interconnecting, or distributing electricity under the direction of an operator, and comprising three poles each having a closing coil (BF1, BF2, BF3) and an opening coil (BO1, BO2, BO3) connected to a voltage source (-T +T), each pole including an opened auxiliary contact (CAO1, CAO2, CAO3) and a closed auxiliary contact (CAF1, CAF2, CAF3), the circuit breaker being controlled by protection devices, the system being characterized in that each of the poles is provided with a microprocessor (µP1, µP2, µP3) receiving information from the opened and closed auxiliary contacts (CAO1, CAO2, CAO3, CAF1, CAF2, CAF3) and a self-monitoring signal from its coils, the microprocessor controlling two static interrupters (ISO1, ISO2, ISO3, ISF1, ISF2, ISF3) respectively in series with the opening coil circuit and with the closing coil circuit, the microprocessor of the there poles being subscribers to a local network comprising a serial bus (B) under the control of a management member (GN), the bus being connected to a processor member (OTC) receiving the signals collected by the microprocessors and the signals (O1, O2, O3, F) emitted by the protection devices or by the operator, said signals being periodically updated in application of a program provided to said management member (GN), said processor member (OTC) using said bus to collect the data provided by each of said microprocessors and issuing orders for authorizing or prohibiting opening which are transmitted over said bus to said microprocessors, said microprocessors controlling the change of state of said static switches to perform circuit breaker opening or closing orders.

2. A system according to claim 1, characterized in that the opening coils (BO1, BO2, BO3) and the closing coils (BF1, BF2, BF3) are respectively in series with the contacts (CP1, CP2, CP3) of a protection member (RP), and with the contacts (CR1, CR2, CR3) of a reclosing circuit (RE), the static switches (ISO1, ISO2, ISO3, ISF1, ISF2, ISF3) being normally closed and being opened only on orders from the microprocessor (µP1, µP2, µP3). at the end of executing the corresponding opening or closing order.

3. A system according to claim 1, characterized in that the opening and closing orders are transmitted to the processor member (OTC) which forwards them to the microprocessors (µP1, µP2, µP3). said static switches (ISO1, ISO2, ISO3, ISF1, ISF2, ISF3) being normally opened and being closed only on orders from the microprocessors, and for the length of time required for enabling an opening or closing order to be performed.

4. A system according to any one of claims 1 to 3, characterized in that the bus (B) possesses a plurality of subscribers constituted by checking members e.g. for checking the pressure of insulating gas (PSF₆), for checking electrical wear by summing Σi²t, or for performing other checks or measurements relating to the environment of the circuit breaker, e.g. measuring oil pressure in hydraulic controls of the circuit breaker or analyzing vibration signatures.

5. A system according to any one of claims 1 to 4, characterized in that each coil permanently conveys a low value current (Io) generated by a circuit constituted by the coil itself, a resistor (R2) and the static switch (IS) associated with the coil, said circuit being powered from a voltage source (-T +T), with the image of said current being transmitted to the microprocessor to provide a self-diagnosis signal concerning the coil and control thereof.

6. A system according to any one of claims 1 to 5, characterized in that the static switches (ISO1, ISO2, ISO3, ISF1, ISF2, ISF3) are connected to the micro-processors via optical fiber links.

7. A system according to any one of claims 1 to 6, characterized in that said bus (B) includes a subscriber (*Vs*) receiving, in particular, data relating to the instants at which opening and closing orders are given, and to the instants at which the auxiliary contacts change state, serving to calculate the execution time of said orders, comparing such times with recorded data, and providing information on the state of wear of the poles.

8. A system according to any one of claims 1 to 7, characterized in that the bus includes a station (µP4) which receives all of the data and which is capable of emitting data, said station being connected by a modem to a telephone line which is in turn connected by a modem to a microcomputer, thereby enabling the apparatus to be remotely controlled.
